# EUROPÄISCHE PATENTSCHRIFT

(11) **EP 1 002 186 B1**
(45) Veröffentlichungstag und Bekanntmachung des Hinweises auf die Patenterteilung: **09.05.2001**
(21) Anmeldenummer: 98961077.9
(22) Anmeldetag: 04.11.1998
(51) Int. Cl.: F01N 3/08, G01M 15/00

(54) **Verfahren zur Erkennung von Defekten in einer Brennkraftmaschine und im Abgasnachbehandlungssystem durch Messung der Schadstoffkomponenten im Abgas während Kaltstart und Fahrt**
Method for a recognition of defects in an internal combustion engine and the exhaust gas after-treatment system by measurement of contaminant components in exhaust gas during cold start and while driving
Procédé de reconnaissance de défauts dans un moteur à combustion interne et le système de traitement ultérieur des gaz d'échappement au moyen de mesure de constituants de substances nocives contenues dans des gaz d'échappement au cours du démarrage a froid et du trajet

(30) Priorität: 30.11.1997 DE 19753006; 09.03.1998 DE 19809798; 14.06.1998 DE 19826179; 05.07.1998 DE 19829892; 29.07.1998 DE 19834037
(43) Veröffentlichungstag der Anmeldung: 24.05.2000
(73) Patentinhaber: WISSENSCHAFTLICHE WERKSTATT FÜR UMWELTMESSTECHNIK GmbH, D-20459 Hamburg (DE)
(72) Erfinder: PALOCZ-ANDRESEN, Michael, D-20459 Hamburg (DE)
(86) Internationale Anmeldenummer: DE9803305
(87) Internationale Veröffentlichungsnummer: WO9928603

(56) Entgegenhaltungen:
- EP-A- 0 427 087
- EP-A- 0 454 937
- EP-A- 0 601 314
- EP-A- 0 609 527
- EP-A- 0 844 373
- WO-A-96/30736
- DE-A- 3 409 948
- DE-A- 4 005 803
- DE-A- 19 645 202
- US-A- 3 852 730
- US-A- 5 163 412
- US-A- 5 678 402
- PATENT ABSTRACTS OF JAPAN vol. 016, no. 173 (M-1240), 24. April 1992 & JP 04 017710 A (MAZDA MOTOR CORP), 22. Januar 1992
- PATENT ABSTRACTS OF JAPAN vol. 098, no. 001, 30. Januar 1998 & JP 09 240431 A (NISSAN MOTOR CO LTD), 16. September 1997
- PATENT ABSTRACTS OF JAPAN vol. 096, no. 007, 31. Juli 1996 & JP 08 077471 A (FUJITSU TEN LTD), 22. März 1996
- PATENT ABSTRACTS OF JAPAN vol. 018, no. 348 (M-1630), 30. Juni 1994 & JP 06 087354 A (TOYOTA MOTOR CORP), 29. März 1994

## Beschreibung

### 1. Einleitung

In den letzten Jahrzehnten wurden die Bestrebungen für die Minderung der Abgasemission deutlich verstärkt. Der Grund der Bemühungen ist die starke Zunahme der Verkehrsmittel, die Emissionen verursachen. Deshalb ist der richtige Weg die Schaffung neuer Verkehrsmittel, die schadstoffarm sind und sparsam mit der Energie umgehen.

### 2. Stand der Technik

Die Abgasemission eines Kraftfahrzeuges setzt sich während eines Fahrzyklus aus zwei wesentlichen Teilen zusammen:
- aus der Kaltstartphase mit hohen Emissionswerten und
- aus einer anschließenden Phase im warmen Betriebszustand mit niedrigen Konzentrationsverläufen.

Ein großes Problem ist, dass die Emissionen während der Fahrt eines Kraftfahrzeuges auf der Straße nicht unter definierten Bedingungen auf dem Rollenprüfstand nachzuvollziehen sind. Deshalb ist ein Test auf dem Rollenprüfstand nicht wirklich aussagekräftig, sondern nur eine teilweise Überprüfung. Die Einhaltung der Grenzwerte für Ultra-Low-Emission-Vehide (ULEV) sowie für EURO III und IV soll deshalb neben den Versuchen am Prüfstand durch den Einsatz neuer Vor-Ort-Messtechniken kontrolliert werden.

In den USA gibt es das On-Board-Diagnose (OBD) II-System für Personenkraftfahrzeuge, das verlangt, dass alle emissionsrelevanten Bauteile, wie Lambda-Sonde, Kraftstoffsystem, Sekundärluftsystem, Abgasrückführung, Tankentlüftung und die Erkennung von Verbrennungsaussetzem überwacht werden. Die Schadstoffkonzentrationen werden jedoch nicht gemessen, sondern indirekt mit geeigneten Sensorsignalen korreliert.

Für den Dreiwegekatalysator gibt es nur einen Grenzwert für Kohlenwasserstoff (HC), dessen Einhaltung indirekt über das Sauerstoffspeicherverhalten des Katalysators überwacht wird. Dazu werden die Messsignale zweier Lambdasonden vor und hinter dem Katalysator verglichen und das Signalverhältnis mit dem Konvertierungsverhalten für Kohlenwasserstoffe korreliert. Diese Technik liefert keine Aussagen über den unmittelbaren HC-Ausstoß. In Kraftfahrzeugen mit immer niedrigeren Emissionsgrenzwerten ist jedoch die unmittelbare Erfassung der Schadstoffkonzentrationen der günstigere Weg.

In den letzten Jahren sind Katalysatorsysteme entwickelt worden, die innerhalb von einer Minute die volle Betriebstemperatur erreichen. Somit sinkt der Schadstoffausstoß auf ein Minimum, verglichen mit dem früheren Zustand, bei dem die Kaltstartemission den wesentlichsten Anteil der Gesamtemission ausmachte. Hier spielen Nachverbrennung, Nachbehandlung oder elektrische Beheizung eine wichtige Rolle. Weiterhin sind Reduziersysteme entwickelt worden, bei denen eine zusätzliche Substanz dem Abgasstrom beigemengt und durch eine chemische Reaktion die erwünschte Veränderung der Abgaszusammensetzung erreicht wird. Adsorptionsmassen dienen zur Zurückhaltung von Schadstoffen während des Kaltstartes. Eine Desorption der zurückgehaltenen Schadstoffe erfolgt, nachdem Motor und Katalysator warm geworden sind. Adsorptionsmassen werden für die Zurückhaltung von unverbrannten Kohlenwasserstoffen auf Aktivkohlebasis und für das Auffangen von Stickoxiden auf Zeolithbasis verwendet. Es gibt zur Zeit allerdings kein Verfahren, das es ermöglicht, die Schadstoffkonzentration im Abgas nicht nur in der Kaltstartphase, sondern auch in Krisensituationen, z. B. bei Fehlern im Verbrennungs- oder Abgasnachbehandlungssystem, zu mindern.

In Druckschrift DE 196 45 202 A1 wird zur verbesserten Überwachung der Konvertierungsrate eines Abgaskatalysators für eine Brennkraftmaschine vorgeschlagen, die hinter dem Abgaskatalysator ermittelten, auf Gramm-Werte umgerechneten HC-Emissionen während eines vorbestimmten Zeitfensters mit der Zeitspanne (dt) aufzusummieren.

Ein Anfangszeitpunkt (tA). Sowie die Zeitspanne (dt) werden unter anderem in Abhängigkeit von der Betriebsweise der Brennkraftmaschine, beispielsweise durch Berücksichtigung des Kraftstoffstromes über der Zeit beeinflusst. Der so während der Zeitspanne (dt) unterhalb einer Kurve angesammelte Summenwert wird mit einem Grenzwert verglichen und bei Erreichen eines vorbestimmten Abweichungswertes ein Fehlersignal ausgegeben. Weitere Parameter zur eindeutigen Bestimmung des Kurvenverlaufs werden in dieser Patentschrift nicht angegeben.

In Druckschrift EP-A-9 609 527 A1 wird zur Überprüfung der Konvertierungsrate von in einen Abgasstrang einer Brennkraftmaschine eingesetzten Abgaskatalysators ein Verfahren angegeben, welches zunächst einen ersten Betriebszustand während einer Zeitperiode mit der Einhaltung von bestimmten Randbedingungen verlangt. Sind diese erfüllt, wird in einer zweiten Zeitperiode, während beispielsweise eines Schubbetriebes, ein, diesem Zustand nicht entsprechendes Abgassignal erzeugt und die Reaktion eines hinter dem Katalysator angeordneten Temperatursensors darauf ausgewertet.

Liegt die Änderung der Abgastemperatur infolge des Abgasimpulses nicht innerhalb vorgesehener Grenzen, so wird ein eine unzulässig niedrige Konvertierungsrate anzeigendes Signal ausgelöst. Andere Parameter, wie der Verlauf von unverbrannten gasförmigen Substanzen im Abgasstrom werden nach diesem Verfahren nicht erfasst.

In PCT/DE 95/01484 wird eine Abgastestvorrichtung dargestellt, die aus einer Abgasmesseinheit zur Messung von wenigstens einer Komponente (NO, CO₂, HC, O₂) des Abgases, aus einer am Auspuffende anschließbaren Messsonde, aus einer Messwertaufnahme- und Steuereinheit besteht. Die zur Auswerteeinheit zugeführten Messwerte werden mit gespeicherten Sollwerten oder Sollwertbereichen verglichen und eine Information über die Zulässigkeit oder Unzulässigkeit der Messwerte ausgegeben. Eine Messung an anderen Stellen im Kraftfahrzeug wird in der Anmeldung nicht vorgeschlagen.

### 3. Definition der Aufgabe durch die Erfassung des Schadstoffausstoßes in Kraftfahrzeugen

Die Erfassung des Schadstoffausstoßes in Kraftfahrzeugen erfolgt mittels eines Überwachungssystems. Dieses Überwachungssystem kann in neuen Kraftfahrzeugen serienmäßig eingebaut sein oder bei älteren Kraftfahrzeugen als modulares Geräteset nachgerüstet werden. Die Nachrüstung erfolgt ohne eine Veränderung der vorhandenen Konstruktion.

Aufgabe der Erfindung ist, die bedeutendsten Möglichkeiten der Fehlerdetektion im Verbrennungsraum, d. h. im Motor und im Abgasnachbehandlungssystem, d. h. im Katalysator durch die unmittelbare Messung der Konzentration der Verbrennungsgase, aufzuzeigen. Die Konzentration dieser Gase an ausgewählten Stellen gibt wichtige Informationen über die Vollständigkeit und Vollkommenheit der Verbrennung im Motorraum sowie über die Konvertierungsrate des Katalysators.

Diese Aufgabe wird erfindungsgemäß durch die Merkmale des Anspruches 1 gelöst. Vorteilhafte Weiterbildungen sind Gegenstand der Unteransprüche.

Die Erfassung feiner Veränderungen im Schadstoffausstoß ist unter den rauen Bedingungen des täglichen Fahrbetriebes eines Kraftfahrzeuges äußerst schwierig. Es bieten sich zwei Alternativen an:
- die Erfassung des Schadstoffausstoßes während der Kaltstartphase und
- die Messung der Schadstoffkonzentration im Abgasweg während der Fahrt.

Ausführungsbeispiele der Erfindung werden nachstehend anhand von Figuren näher erläutert:

Es zeigen:
Figur 1 Hauptbestandteile des Verbrennungssystems im Kraftfahrzeug
   1) Motor
   2) Abgasnachbehandlungssystem mit Katalysator, Schalldämpfer und Auspuffrohr
   3) Messsystem
Figur 2 Fahrtkurve eines amerikanischen US 75-Testzyklus (oben) mit der zugehörigen Schadstoffemission (unten)
Figur 3 Messaufbau zur Vergleichsmessung
Figur 4 Emission während des Kaltstartes beim LEV-Kraftfahrzeug
Figur 5 Verlängerung der Kaltstartzeit und Zunahme der absoluten Kohlenwasserstoffemission durch Alterung des Katalysators
Figur 6 Erläuterung der bestimmenden Parameter für die mathematische Analyse der Kaltstartemission
   4) Zeitliche Lage des Emissionsmaximums nach dem Start
   5) Maximale Konzentration der gemessenen Komponente
   6) Zeitdauer der Kaltstartphase
   7) Fläche der Kaltstartemission
Figur 7 Ablauf einer Emissionsminderungsmaßnahme
Figur 8 Prinzipielle Anordnung des Adsorptionssystems im Abgasweg eines Kraftfahrzeugs
   8) Verbrennungssystem
   9) Abgasnachbehandlungssystem
   10) On-Board-Überwachungssystem
   11) Ventil
   12) Erste Adsorptionsfalle
   13) Zweite Adsorptionsfalle
   14) Heizungssystem
   15) Vakuumsystem
Figur 9 Übertragung der Daten zwischen den Verkehrsmitteln und der Leitzentrale
   16) Lokomotive
   17) Datenträger
   18) Telefon
   19) Schiff
   20) Satellitenübertragung
   21) Flugzeug
Figur 10 Verminderung der Fahrgeschwindigkeit eines Schiffes infolge von emissionsbedingten Vorgaben aus einer Leitzentrale

### 3.1. Messung der Schadstoffkonzentration im Abgasweg während der Fahrt

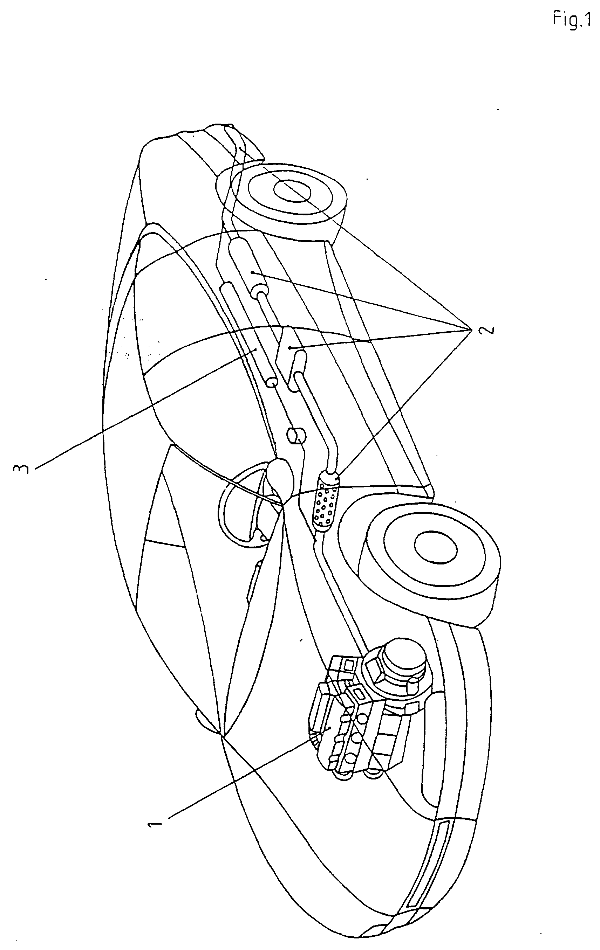

Das Verbrennungssystem eines Kraftfahrzeuges besteht aus zwei hauptsächlichen Elementen, dem Motor (1) und dem Abgasnachbehandlungssystem (2), s. Fig. 1. Die Messwerte hinter dem Motor geben Auskunft über den Verbrennungsvorgang, die Messsignale hinter dem Katalysator über den Zustand des Abgasnachbehandlungssystems. Die Konzentration der wichtigsten Schadstoffe sieht an diesen beiden Stellen sehr unterschiedlich aus. Hinter dem Motor herrschen Konzentrationen, die 10-100 mal höher liegen als hinter einem technisch einwandfrei funktionierenden Katalysator. Das hier beschriebene Messsystem (3) nimmt an beiden Stellen aktiv Werte auf.

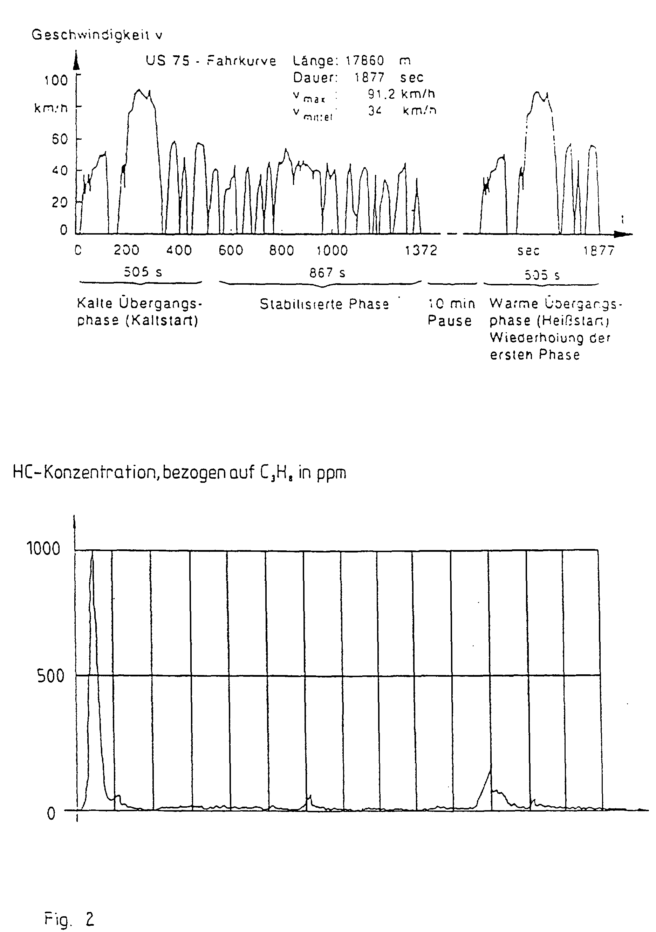

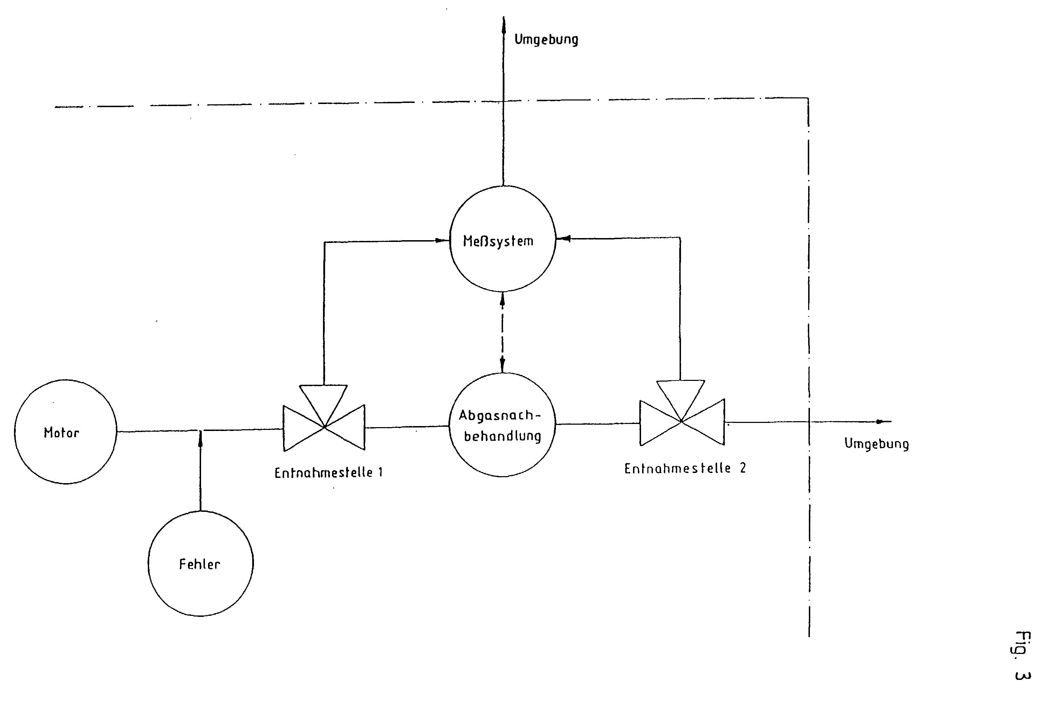

Fig. 2 zeigt eine Messung nach dem amerikanischen US 75-Zyklus in einem Low-Emission-Vehicle (LEV), aufgenommen hinter dem Katalysator. Im Bild sieht man nach der Kaltstartphase trotz Brems- und Beschleunigungseffekten kaum eine Emission. Allein anhand der Konzentrationswerte ist der Nachweis eines kleineren oder schleichenden Schadens in diesen Kraftfahrzeugen kaum möglich. Man misst nämlich Messsignale um den Nullpunkt herum, die allerdings einer natürlichen Schwankung ausgesetzt sind. Man kann die Konzentrationszunahme, hervorgerufen durch einen kleineren Schaden, kaum von einer Zunahme des Rauschens, verursacht durch äußere Einflüsse, unterscheiden. Hier hilft die Anwendung der Anreicherungstechnik. Es kann z. B. ein definierter Fehler im Verbrennungsvorgang modelliert werden. Diese modellhafte Vorgabe eines Defektes im Verbrennungssystem kann zu definierten Schadstoffkonzentrationen hinter dem Motor führen. Der daraus resultierende Schadstoffstoß kann vor und hinter dem Katalysator gemessen werden und als Vergleichswert dienen, s. Fig. 3. Dazu wird Abgas zuerst hinter dem Motor aber noch vor dem Katalysator entnommen. Dieses Abgas ist unbehandelt und enthält die echten Messsignale für die Charakterisierung des Motorzustandes. Aus der Messung hinter dem Katalysator kann man den Zustand des Nachbehandlungssystems gut erfassen.
- Die wechselweise erfolgende Belastung des Analysatorsystems mit Abgasen von der Messstelle vor und hinter dem Katalysator (hohe und niedrige Schadstoffkonzentrationen) spart Mittel und Platz im Kraftfahrzeug, weil nur ein Messgerät mit einem angepassten Messbereich eingesetzt werden muss. Dieses Messgerät wird dem Messbereich der Konzentration nach dem Katalysator entsprechend ausgelegt. Die Konzentration vor dem Katalysator mit dem hohen Messbereich kann durch Verdünnung angepasst und dadurch im gleichen Messgerät mit der feineren Auflösung erfasst werden.

### 3.2. Erfassung des Schadstoffausstoßes während der Kaltstartphase

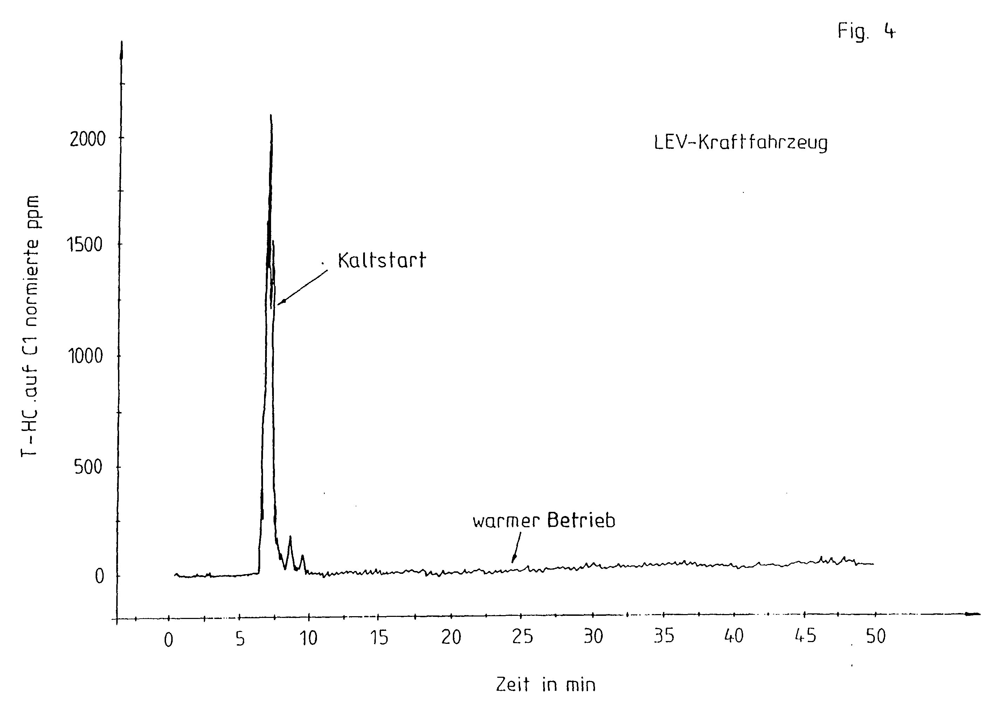

Fig. 4 zeigt das Fahrverhalten eines LEV-Kraftfahrzeuges, gemessen nach dem Katalysator. Abgesehen von einer erhöhten Emission in der Kaltstartphase ist die HC-Konzentration sehr niedrig. Die während der Kaltstartphase in den ersten 40-80 Sekunden nach dem Start messbaren Konzentrationen sind, verglichen mit dem späteren niedrigen Niveau des Schadstoffausstoßes, hoch. Sie betragen unter Umständen mehrere 1000 ppm. Somit sind sie messtechnisch günstiger zu erfassen als die niedrigeren Konzentrationen während des späteren warmen Betriebes.

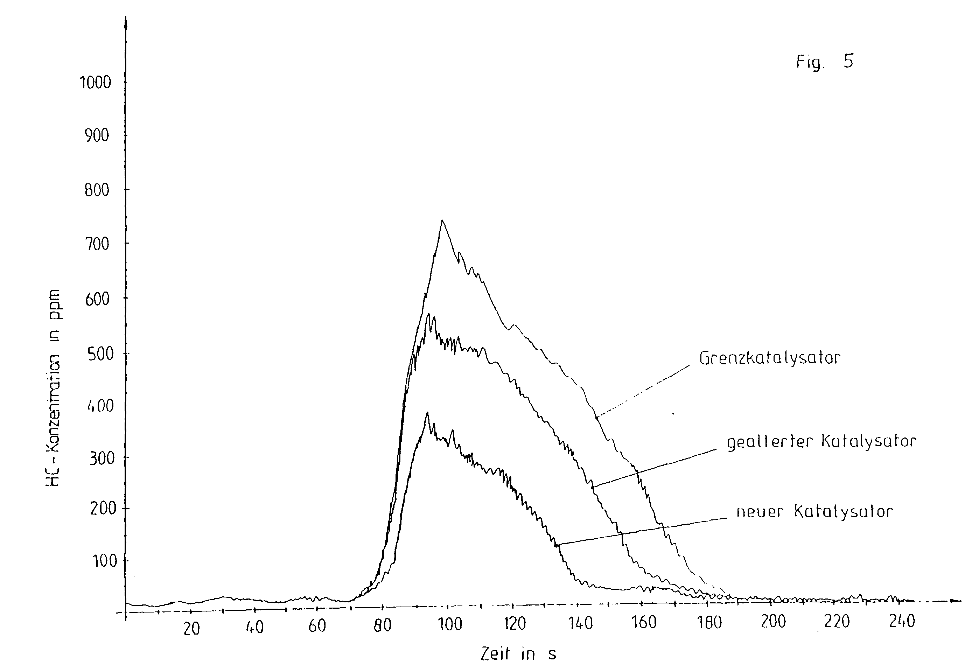

Die Erfassung der Kaltstartphase hat den Vorteil, dass sich Fehler im Abgasaufbereitungssystem in dieser Phase besonders drastisch zeigen. Fig. 5 stellt die Vergrößerung des Kaltstartpeaks durch Alterung des Katalysators dar. Neben der Verlängerung der Emissionszeit, die mit der notwendigen höheren Katalysatortemperatur zusammenhängt, nimmt auch die absolute Höhe der Schadstoffemissionen zu. Durch Verlust an aktiven Plätzen im Katalysator geht der Wirkungsgrad der Konvertierung zurück.

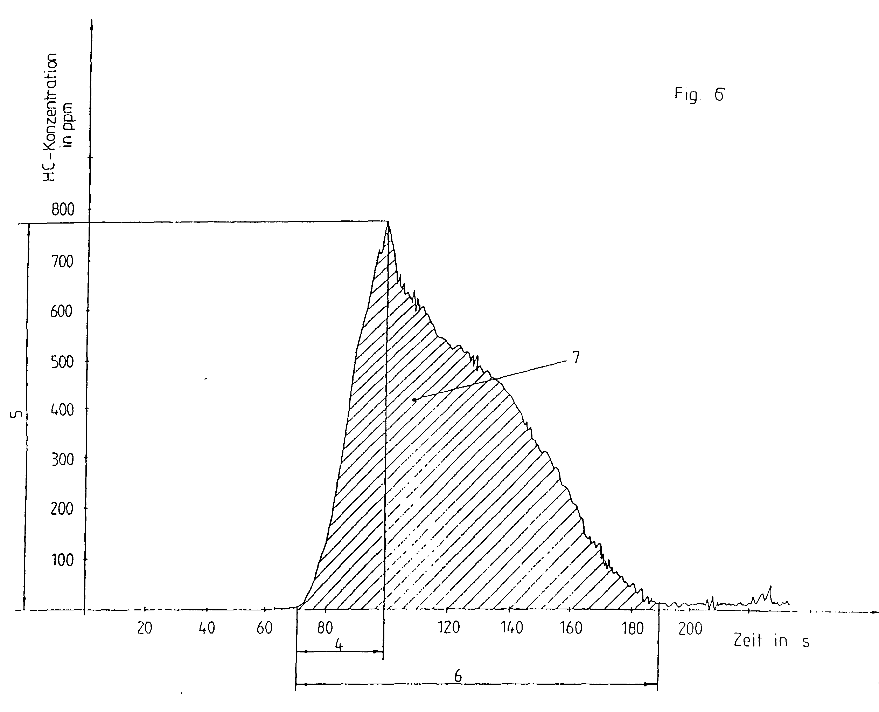

Die Form und Größe des Kaltstartpeaks können das Fahrverhalten selbst der neuesten Kraftfahrzeuge gut wiederspiegeln. Es empfiehlt sich, die zeitliche Lage des Emissionsmaximums nach dem Start (4), die maximale Konzentration der gemessenen Komponente (5), die Zeitdauer der Kaltstartphase (6) und die Fläche der Kaltstartemission (7) festzuhalten, s. Fig. 6. Jedes Kraftfahrzeug bekommt beim Verlassen des Produktionsbetriebes oder der Fachwerkstatt ein individuelles Kennfeld, das aus mehreren Kaltstarts als Durchschnitt gebildet wird. Die obigen vier Kenngrößen werden im Kraftfahrzeug gespeichert. Die jeweiligen Umweltbedingungen, wie Außenlufttemperatur, Druck, Feuchte etc. werden auf einen normierten Zustand bezogen. Jede weitere Kaltstartphase wird mit diesem Kennfeld verglichen und die aufgetretenen Veränderungen, konkretisiert anhand der obigen vier Kenngrößen (4-7), werden bestimmt. Überschreiten sie einen vorgegebenen Grenzwert, so muss eine Alarmmeldung ausgelöst werden.

### 4. Minderung des Schadstoffausstoßes von Kraftfahrzeugen bei Defekten während der Fahrt

Hier sollen Verfahren beschrieben werden, die es erlauben, in Fällen erhöhter Emissionswerte im Abgas beim Defekt oder starker Luftbelastung bei hohem Verkehrsaufkommen Maßnahmen zu ergreifen, die dazu führen, dass der Schadstoffausstoß auf ein Minimum reduziert wird.

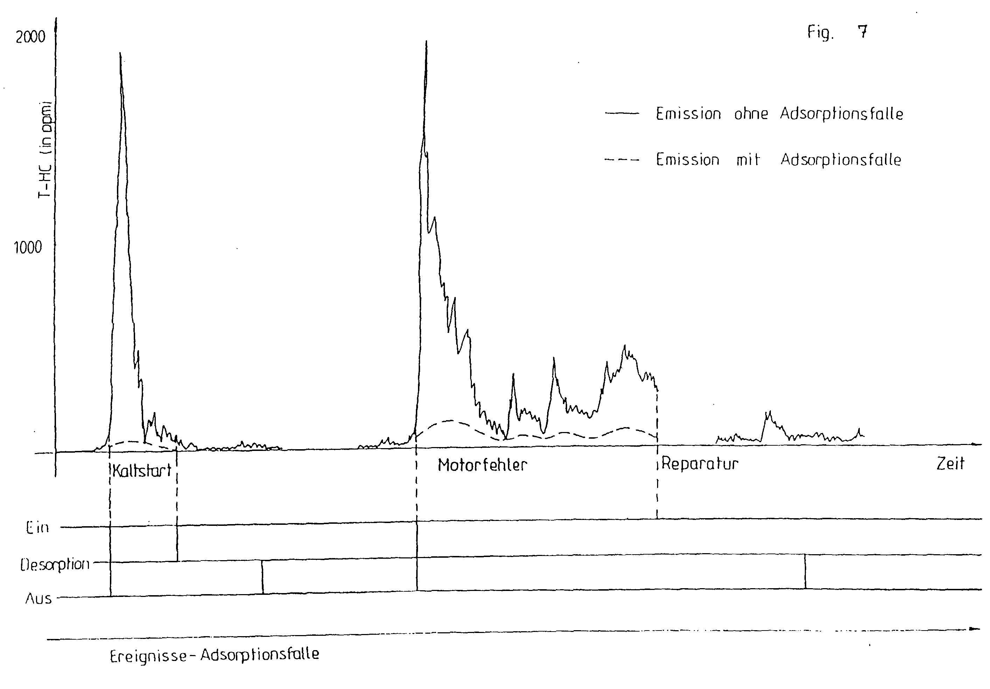

Zur Minderung von erhöhten Schadstoffkonzentrationen kann ein Adsorptionssystem in den Abgasweg geschaltet werden, s. Fig. 7. Eine Adsorptionsfalle besteht aus mindestens einer, aber Vorteilhafterweise aus mehreren chemischen Substanzen, die nicht nur die Kohlenwasserstoffe, sondern auch die CO- und NO-Moleküle durch eine entsprechende Adsorption zurückhalten. Solch eine Mischung kann z. B. aus Aktivkohle, aus Braunerde, auch Hopkalit genannt, und aus verschiedenen Zeolithmassen bestehen.

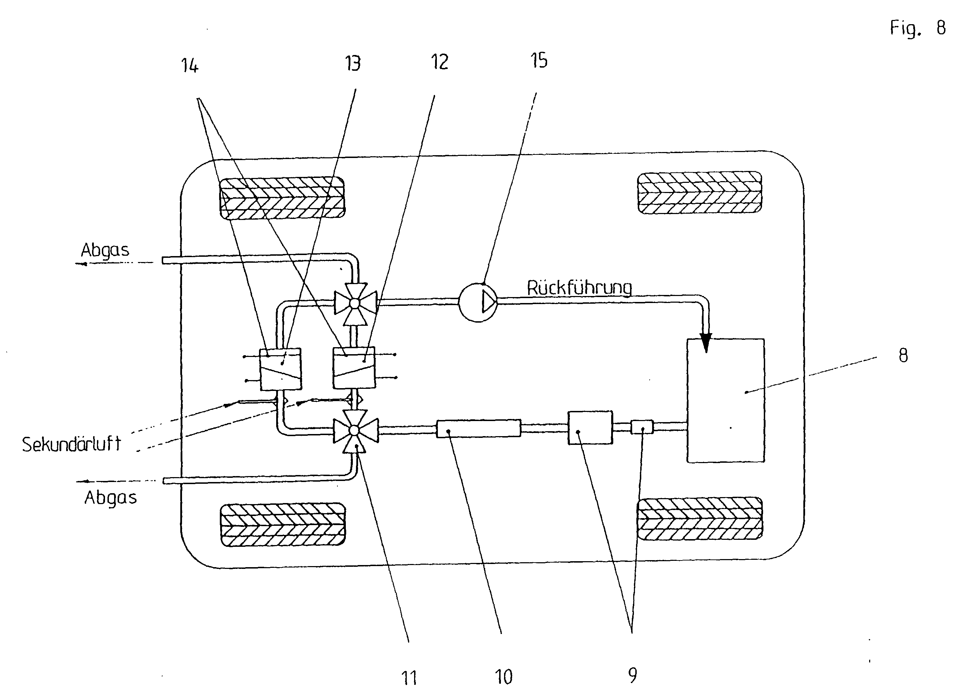

Im normalen Betrieb strömt das Abgas ungehindert durch das Abgasrohr ins Freie. Wird jedoch das Kraftfahrzeug nach längerer Standzeit gestartet oder treten Probleme im Verbrennungs- (8) oder im Abgasnachbehandlungssystem (9) auf, s. Fig. 8, so meldet das On-Board-Überwachungssystem (10) (OBD- oder OBM-System) nicht nur dem Fahrer einen Fehler, sondern schaltet auch den Abgasstrom durch ein Ventil (11) um. Bei hohem Verkehrsaufkommen (Stau, Innenstadt) kann das Adsorptionssystem selbständig oder nach Vorgabe durch das Verkehrsleitsystem vom Fahrer in den Abgasweg geschaltet werden. Nach der Umschaltung strömt das Abgas nicht mehr ungehindert ins Freie, sondern wird durch ein Adsorptionssystem geleitet. Das Adsorptionssystem besteht aus zwei Adsorptionsfallen im Wechselbetrieb (12 und 13). Beim Kaltstart oder bei einem Fehler im Verbrennungs- oder Abgasnachbehandlungssystem wird das Abgas durch das Adsorptionssystem geleitet. Bei einem Defekt im Verbrennungssystem werden alle Schadstoffe gespeichert, bis der Fehler behoben ist. Bei einem Defekt im Abgasnachbehandlungssystem werden die Adsorptionsfallen abwechselnd geschaltet und regeneriert, wobei die desorbierten Schadstoffe in konzentrierter Form in den Verbrennungsraum (unter Beimengung von Sekundärluft) des einwandfrei funktionierenden Motors zurückgeführt werden. Die Desorption wird durch Erhöhung der Temperatur mittels eines Heizungssystems (14) und/oder durch Herabsetzung des Druckes durch ein Vakuumsystem (15) erreicht. Mit Hilfe dieses Verfahrens kann der Zeitraum, der zwischen der Meldung und der Reparatur des Fehlers liegt, ohne erhöhten Schadstoffausstoß überbrückt werden. Der Fahrer kann selbst in nicht besonders dicht besiedelten Gebieten nach Erkennung/Meldung des Fehlers noch 100... 1000 km, praktisch bis zum Erreichen der nächsten Reparaturwerkstatt, problemlos weiterfahren.

Das Wechseln bei verbrauchter und nicht mehr regenerierbarer Adsorptionsmasse wird einfach und mit modularer Technik vorgenommen. Der Vorgang erfolgt vergleichbar zu dem heutigen Ölfilterwechsel. Die Aufbereitung der endgültig verbrauchten Adsorptionsmassen sollte organisiert erfolgen. Adsorptionsschüttgut kann ähnlich entsorgt werden wie heute z. B. das Altöl. Die weitere Verwertung der gesammelten Adsorptionsmassen kann nach dem jeweiligen Stand der Technik erfolgen.

Eine weitere Möglichkeit zur Senkung des Schadstoffausstoßes während des Kaltstartvorganges ist das Verfahren zur einheitlichen und vom Fahrer unabhängigen Steuerung des Startvorganges. Das Verfahren beinhaltet, dass alle Kraftfahrzeuge mit einer automatischen Startvorrichtung ausgerüstet werden. Diese führt den Startvorgang selbsttätig und optimal. Dabei werden die äußeren Bedingungen, wie Temperatur, Luftdruck, Luftfeuchte, Windstärke, Windrichtung, Eis und die Werte des On-Board-Überwachungssystems mit in die Regelung einbezogen.

### 5. Erfassung des Schadstoffausstoßes in Flugzeugen, Schiffen und Diesel-Lokomotiven

Die großen Emittenden der Fahrzeugindustrie sind Schiffe, Flugzeuge und die nicht elektrisch angetriebenen Lokomotiven.

Allen drei Verkehrsmitteln ist gemeinsam, dass sie Kohlenwasserstoffe verbrennen und die Endprodukte des Verbrennungsvorganges unkontrolliert in die Umgebung leiten. Aus diesem Grunde muss ein Messsystem im Abgasstrom des Verbrennungssystems untergebracht sein. Das Messsystem kann unmittelbar oder durch eine Entnahmestelle mit dem Abgasstrom in Berührung gebracht werden.

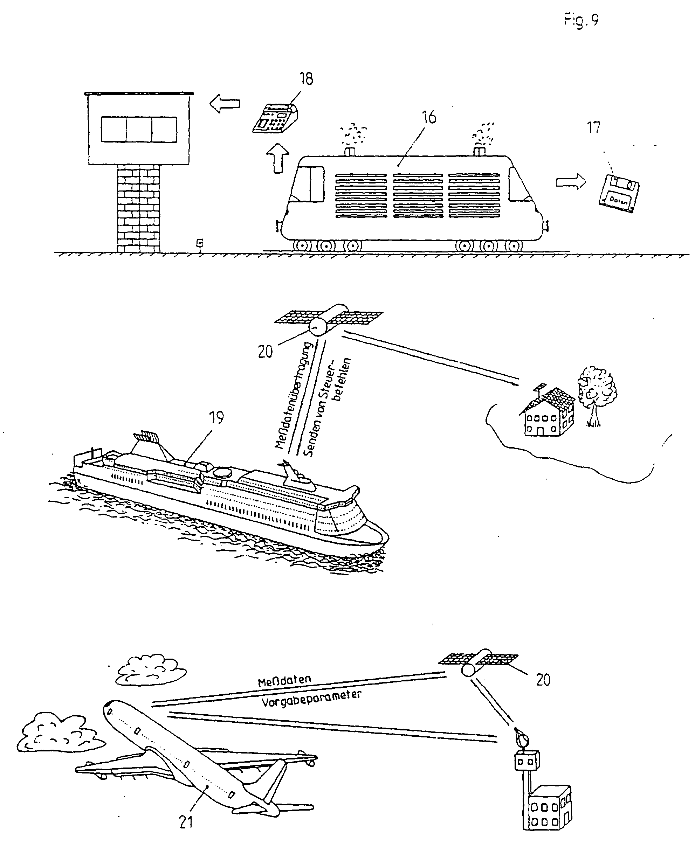

Die Datenspeicherung und -übertragung kann bei Lokomotiven (16) in einem Rechner erfolgen, der mit dem Messsystem über entsprechende Schnittstellen verbunden ist, die Daten auf einem Datenträger (17) sammelt und nach jeder Reise eine Archivierung vornimmt, s. Fig. 9. Die Übertragung der Daten kann auch per Telefon (18), wie bei den heutigen Intercityzügen, erfolgen. Man kann die Daten bereits unterwegs an die entsprechenden Stationen übertragen, wo eine Auswertung erfolgen kann. Bei Schiffen (19) soll die Übertragung der gesammelten Daten mit Speichermedien, wie Disketten oder verschiedenen Karten, durch die unmittelbare Auslesung der Daten an der Schnittstelle und auch per Satellitenübertragung (20) möglich sein. Im Flugzeug (21) ist der Einsatz der Mikrosystem- und Leichtbautechnik gefordert. Die Daten des Fluges müssen auf dem Mikrodatenträger gespeichert sein. Dabei empfiehlt es sich, alle Triebwerke zu überwachen. Die Strahltriebwerke sind offene Systeme, die die heißen Abgase mit großer Geschwindigkeit in die Atmosphäre ausstoßen. Das Messsystem muss die Mischungsverhältnisse und die äußeren Bedingungen berücksichtigen. Besonders wichtig ist der ungestörte Ablauf des Flugbetriebes. Das Auslesen der gespeicherten Daten kann am Boden per Datenträger und in der Luft per Funk erfolgen. Die Methode der Datenübertragung per Satellit muss ebenfalls berücksichtigt werden.

Bei allen drei Verkehrsmitteln ist die Warnung des Bordpersonals über Abnormitäten im Betrieb eine erstrangige Aufgabe, genauso wichtig ist die Sammlung von Emissionsdaten. Die Auswertesysteme an Bord müssen so ausgelegt sein, dass sie bei Verletzung der eingestellten Grenzwerte Warnsignale On-Board abgeben. Solche Signale können auf Abweichungen oder auf Fehler im Verbrennungs- oder im Abgasnachbehandlungssystem hinweisen. Durch die On-Board-Überwachung nimmt die Sicherheit des Betriebes am Verkehrsmittel zu.

Jedes Verkehrsmittel der obigen Kategorien muss über gespeicherte Kennfelder verfügen, die die Emissionsgrenzwerte sowohl als Einzelverläufe mit Angaben zum dynamischen Verhalten als auch summarisch enthalten. Solche Systeme müssen genaue Daten über die erlaubten Emissionswerte pro km oder Meile erhalten. Das Auswertegerät muss exakte Parametervorgaben für ausgewählte Zeitabschnitte erhalten, so z. B. für Start- oder Landevorgänge beim Flugzeug, für Anfahren oder Bremsen der Diesellokomotive und für Manövrieren im Hafen bei Schiffen. Diese Vorgaben werden nach Typ, Baujahr und nach weiteren speziellen Parametern des Verkehrsmittels erstellt.

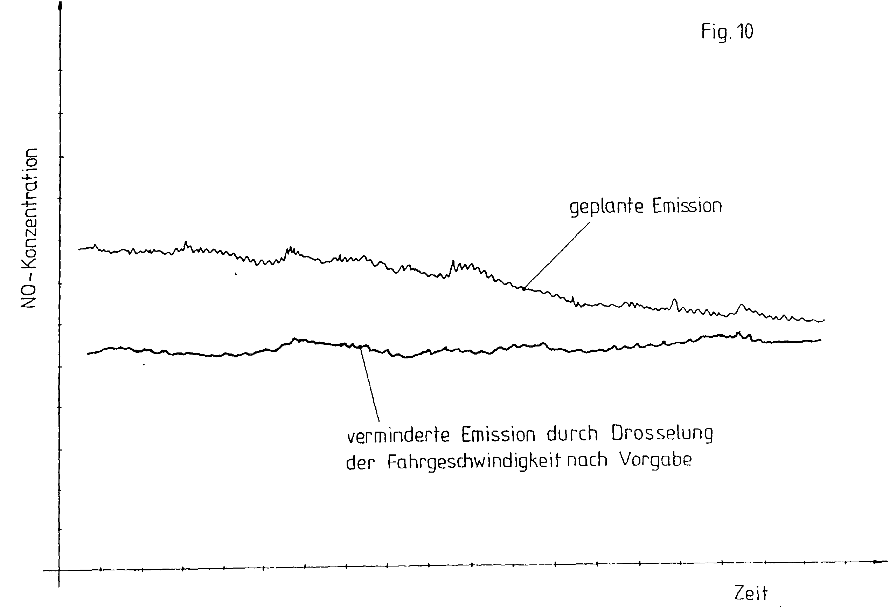

Beim offenen Erfassungssystem werden Messungen mit und ohne interne Regelung vorgenommen und die jeweils aktuellen Messwerte mit einem abgelegten Kennfeld verglichen. Eine Warnmeldung erfolgt beim signifikanten Überschreiten der Grenzwerte. Beim geschlossenen System stehen die Verkehrsmittel mit den entsprechenden Leitsystemen ständig in Verbindung. Es kann unter Umständen nötig sein, die Vorgaben für Fahrt oder Flug vom Leitsystem aus zu verändern. So können emissionsbedingt Geschwindigkeiten gedrosselt oder erhöht werden, sogar Fahrtruten können geändert werden, wenn sich diese Änderung als notwendig erweist, s. Fig. 10. So werden Emissionsgrenzwerte von der Leitzentrale vorgegeben, die an Tagen oder Orten mit besonders starker Belastung nötig sind. Die Berücksichtigung der dadurch entstehenden Vor- und Nachteile bei der Erfüllung der transporttechnischen Aufgaben erfolgt mit dem Auswertesystem. Alle gespeicherten Daten werden gesammelt und einer internationalen Auswertung zugeführt.

## Patentansprüche

1. Verfahren zur Erkennung von Defekten im Motor und im Abgasnachbehandlungssystem mit Katalysator durch Messung von Schadstoffkomponenten im Abgas von Kraftfahrzeugen dadurch gekennzeichnet, dass die während der Kaltstartphase auftretende Konzentration an Gaskomponenten, Kohlenwasserstoffe (HC), Kohlenmonoxid (CO) und Stickstoffmonoxid (NO) mit Hilfe eines Gasanalysators bestimmt wird und
- die maximale Konzentration der gemessenen Komponente
- die Zeitdauer der Kaltstartphase
- die zeitliche Lage des Emissionsmaximums nach dem Start
als charakteristische Parameter für die Beurteilung des Zustandes des Kraftfahrzeuges angesehen werden, wobei jedes Kraftfahrzeug bei der Qualitätskontrolle im Herstellungsbetrieb oder in einer Fachwerkstatt die Kaltstartphase mehrmals durchfährt und die während des Tests, bei fehlerfreiem Zustand aller abgasrelevanten Bauelemente gewonnenen und als statistische Durchschnittsgrößen dargestellten Daten der charakteristischen Parameter im bordeigenen Mess-, Steuer- und Regelsystem gespeichert werden und die bei jedem neuen Kaltstartvorgang gemessenen charakteristischen Parameter mit den gespeicherten charakteristischen Parametern verglichen werden, wobei eine unerwünscht große, grenzwertverletzende Veränderung zu einer Warnmeldung führt.

2. Verfahren nach Anspruch 1 dadurch gekennzeichnet, dass der Startvorgang für die optimale Einstellung der charakteristischen Parameter von bordeigenen Mess-, Steuer und Regelsystem aus automatisch gesteuert wird, wodurch das Fahrzeug ein optimales. einheitliches, ständig vergleichbares und kontrollierbares Startverhalten bekommt, wobei die wichtigsten Umweltparameter, wie Außentemperatur, Luftdruck, Feuchte sowie Windrichtung und Stärke sowie Eisbildung, bezogen auf den Normzustand, zur optimalen Einstellung der charakteristischen Parameter während des Startvorganges herangezogen werden.

3. Verfahren nach einem der vorhergehenden Ansprüche dadurch gekennzeichnet, dass während der Fahrt künstlich und bewusst Fehler im Kraftfahrzeug modellhaft vorgegeben werden, die zu einer definierten und bekannten Erhöhung der Schadstoffkonzentration führen, die messtechnisch erfasst und anhand der charakteristischen Parameter ausgewertet werden, wobei
- die nach dem Verbrennungssystem auftretenden hohen Konzentrationen mit einer Pumpe verdünnt
- und die niedrigen Konzentrationen hinter dem Katalysator unverdünnt gemessen
- und die beiden, vor und hinter dem Katalysator gemessenen Verläufe anhand der charakteristischen Parameter
miteinander verglichen werden.

4. Verfahren nach einem der vorhergehenden Ansprüche dadurch gekennzeichnet, dass die Methode auf alle Verbrennungsmaschinen, wie in Schiffen, Flugzeugen und Diesellokomotiven angewendet wird.

5. Verfahren nach einem der vorhergehenden Ansprüche dadurch gekennzeichnet, dass die Gasführung beim Vorliegen einer grenzwertverletzenden Überschreitung der Vorgaben für die charakteristischen Parameter bei Fehlern im motorischen und im abgastechnischen Bereich zwischen dem freien Abgasweg und einem Adsorptionssystem hinter dem Katalysator, automatisch oder manuell umgeschaltet wird und das Abgas durch die Adsorptionsmasse geleitet wird.

6. Verfahren nach Anspruch 5 dadurch gekennzeichnet, dass die Adsorptionsmasse auch bei externen Vorgaben aus dem Verkehrsleitsystem, so bei hohen Verkehrsaufkommen oder beim Fahrverbot für umweltbelastende Kraftfahrzeuge in den Abgasweg geschaltet und das Abgas durch die Adsorptionsmasse geleitet wird.

7. Verfahren nach Anspruch 5 dadurch gekennzeichnet, dass die Adsorptionsmasse je nach Motorart, Fahrzeugtyp und Leistung sowohl qualitativ als auch quantitativ unterschiedlich, aus mehreren, verschiedenartig dosierten Stoffen zusammengestellt wird, so dass sie sowohl für den Einsatz im Otto- als auch im Dieselfahrzeug anwendbar ist.

8. Verfahren nach Anspruch 5 dadurch gekennzeichnet, dass die Menge der Adsorptionsmasse nach der durchschnittlichen Dauer der landesüblichen Fahrstrecke bis zur nächsten Reparaturwerkstatt und dem durchschnittlichen Emissionsausstoß nach Fahrzeugtyp bei einem Defekt ausgelegt wird.

9. Verfahren nach Anspruch 5 dadurch gekennzeichnet, dass die verbrauchte Adsorptionsmasse nach mehreren Desorptionsschritten an Tankstellen gewechselt und einer weiteren Verwertung oder Entsorgung zugeführt wird.

## Claims

1. A process for the recognition of defects in engines and in the exhaust after-treatment system with a catalytic converter by measuring the contaminant components in the exhaust fumes produced by the vehicle characterised by the fact that a concentration of gaseous components, hydrocarbons (HC), carbon monoxide and nitrogen monoxide (NO) produced during the cold start phase is recognised by means of a gas analyser and
- the maximum concentration of measured components
- the time period of the cold start phase
- the position in time of the emission maximum after the start
are seen as characteristic parameters for the evaluation of the state of the vehicle, in which each vehicle undergoes a cold start several times during the quality control of the manufacturing plant or in a specialist workshop and all the data of the characteristic parameters which is collected during the test in which all exhaust-related components are in a fully operational condition and which is represented as a statistical average is stored by the vehicle's own on-board measuring, control and regulating system and the characteristic parameters recorded during every new cold start phase are compared with the stored characteristic parameters, in which an undesired major overstepping of limit values triggers a warning message.

2. A process characterised by claim 1 that automatically controls the start process for an optimised setting of the characteristic parameters from the on-board measuring, control and regulation system, whereby the vehicle receives an optimised, uniform, constantly comparable and controllable start behaviour, in which the most important environmental parameters such as ambient temperature, air pressure, humidity and wind direction and strength as well as the formation of ice, related to the normal state are considered in order to provide an optimised setting of the characteristic parameters during the start process.

3. A process characterised by one of the aforementioned claims in which defects are artificially and consciously modelled in the vehicle in accordance with preset values during driving which lead to a defined and known increase in the contaminant concentration that is measured and evaluated by means of characteristic parameters, whereby
- the high concentrations that occur after the combustion system undergo rarefaction with a pump
- and the low concentrations behind the catalytic converter are measured unrarefied.
- and both stages measured before and behind the catalytic converter are compared with each other by using the characteristic parameters.

4. A process characterised by one of the aforementioned claims that applies the method to all combustion engines such as those on board ships, aircraft and diesel locomotives.

5. A process characterised by one of the aforementioned claims in which, in the event of one of the limit values for the characteristic parameters being exceeded, or in the event of a defect in the engine and in the exhaust system, the gas flow is switched between the free flow of exhaust fumes and an adsorption system located after the catalytic converter and that the exhaust fumes are guided through adsorbers.

6. A process in accordance with claim 5 characterised by adsorbers vehicles in the exhaust gas flow which are activated either externally by the traffic guidance system or by heavy traffic or by a driving ban for environmentally unfriendly and the exhaust gases are guided through the adsorbers.

7. A process in accordance with claim 5 characterised by the fact that the adsorber depending on engine type, vehicle type and output is assembled both in quality as well as in quantity from several materials of various amounts so that it can be used both on petrol engines as well as on diesel engines.

8. A process in accordance with claim 5 characterised by the fact that, in the event of a defect, the quantity of the adsorber substance is designed to enable a journey to the nearest repair workshop based on the average length of time taken on an average road and to accommodate the average contaminant output according to vehicle type.

9. A process in accordance with claim 5 characterised by the fact that the used adsorber substance can be replaced at the petrol station after several adsorbing stages and be recycled or disposed of.

## Revendications

1. Procédé pour la reconnaissance de défauts dans le moteur et dans le système de traitement ultérieur des gaz d'échappement par catalyseur en mesurant les composants polluants dans les gaz d'échappement de véhicules automobiles caractérisé par le fait que la concentration en composants de gaz, hydrocarbures (HC), monoxyde de carbone (CO) et monoxyde d'azote (NO) apparaissant pendant la phase de démarrage à froid est déterminée au moyen d'un analyseur de gaz et que
- la concentration maximale du composant mesuré
- la durée de la phase de démarrage à froid
- la situation temporelle du maximum d'émissions après le démarrage
sont considérées comme des paramètres caractéristiques pour l'appréciation de l'état du véhicule automobile, étant donné que chaque véhicule, durant le contrôle de qualité à l'usine du constructeur ou dans un garage spécialisé, subit plusieurs fois la phase de démarrage à froid, que les données des paramètres caractéristiques recueillies pendant le test sous forme de moyennes statistiques dans le système de mesure embarqué de commande et de contrôle, et obtenues sur la base d'un parfait fonctionnement de tous les composants pertinents en matière de gaz d'échappement sont mémorisées, que les paramètres caractéristiques mesurés à chaque nouvelle phase de démarrage à froid sont comparés aux paramètres caractéristiques déjà mémorisés et qu'un changement trop important dépassant les valeurs limites conduit au déclenchement d'un signal d'alarme.

2. Procédé selon la revendication 1 caractérisé par le fait que le processus de démarrage pour un réglage optimal des paramètres caractéristiques est commandé par le système embarqué de mesure de commande et de contrôle, ce qui confère au véhicule un comportement au démarrage optimal, toujours identique et constamment comparable et contrôlable, en tenant compte du fait que les paramètres les plus importants liés à l'environnement, tels que la température extérieure, la pression atmosphérique, l'humidité, la direction et la force du vent ou la formation de glace, sont mis en rapport avec un état normalisé pour obtenir un réglage optimal des paramètres caractéristiques durant la phase de démarrage.

3. Procédé selon une des revendications précédentes caractérisé par le fait que, durant la marche, des défauts volontairement simulés dans le véhicule et donnés sous forme de modèle conduisent à une augmentation définie et connue de la concentration de matières polluantes qui sont alors mesurées et analysées à l'aide des paramètres caractéristiques,
- les concentrations élevées survenant à la sortie du système de combustion étant mesurées après dilution par une pompe
- et les faibles concentrations à la sortie du catalyseur étant mesurées non-diluées,
- les deux cours obtenus avant et après le catalyseur
étant comparés l'un avec l'autre en se référant aux paramètres caractéristiques.

4. Procédé selon l'une des revendications précédentes caractérisé par le fait que la méthode est utilisée sur tous les moteurs à combustion interne, comme sur les navires, les avions et les locomotives Diesel.

5. Procédé selon l'une des revendications précédentes caractérisé par le fait que, s'il y a dépassement des valeurs limites choisies pour les paramètres caractéristiques en cas de défaut dans la zone de moteur ou d'échappement des gaz entre l'échappement libre et le système d'adsorption en aval du catalyseur, l'écoulement des gaz est dévié automatiquement ou manuellement et les gaz brûlés sont dérivés au travers de la masse d'adsorption.

6. Procédé selon la revendication 5 caractérisé par le fait que, également pour des valeurs externes allouées par le système d'aiguillage du trafic, par exemple en cas de fort trafic ou en cas d'interdiction de rouler pour les véhicules polluants, la masse d'adsorption est introduite dans le circuit d'échappement et les gaz brûlés sont ainsi dérivés au travers de la masse d'adsorption.

7. Procédé selon la revendication 5 caractérisé par le fait que, selon le genre du moteur et le type et la puissance du véhicule, la différence pouvant être aussi bien qualitative que quantitative, la masse d'adsorption est composée de plusieurs substances différemment dosées pour qu'elle soit apte à être utilisée aussi bien pour les véhicules à moteurs à essence que pour ceux à moteur Diesel.

8. Procédé selon la revendication 5 caractérisé par le fait que la quantité de masse d'adsorption est définie en fonction, selon le pays, de la durée moyenne du trajet jusqu'au prochain atelier de réparation et du rejet moyen d'émissions polluantes en cas de panne.

9. Procédé selon la revendication 5 caractérisé par le fait que la masse d'adsorption usée puisse être, après plusieurs étapes de désorption, échangée dans les stations service pour être récupérée ou éliminée.
